# EUROPEAN PATENT APPLICATION

(11) **EP 4 492 012 A1**
(43) Date of publication of application: **15.01.2025**
(21) Application number: 22930937.2
(22) Date of filing: 11.03.2022
(51) Int. Cl.: G01D 5/245

(54) **MAGNETIC YOKE ASSEMBLY AND SENSOR DEVICE**

(71) Applicant: JTEKT Corporation, Kariya-shi, Aichi 448-8652 (JP); JTEKT COLUMN SYSTEMS CORPORATION, Kosai-shi, Shizuoka 431-0431 (JP)
(72) Inventor: KUWAHARA Yuya, Kariya-shi, Aichi 448-8652 (JP); TOYAMA Yuichi, Kariya-shi, Aichi 448-8652 (JP); KAWAMURA Naofumi, Kariya-shi, Aichi 448-8652 (JP); NAKAAKI Takao, Kosai-shi, Shizuoka 431-0431 (JP)
(74) Representative: Winter, Brandl - Partnerschaft mbB
(86) International application number: PCT/JP2022/011021
(87) International publication number: WO 2023/170956

(57) **Abstract**

A magnetic yoke assembly (42) includes a pair of yoke cores (61, 62), an annular collar (63), and a tubular holder (64) that holds the pair of yoke cores (61, 62) and the collar (63). The holder (64) includes a gear portion (75) that includes a plurality of external teeth (77) protruding radially outward from the holder (64). The collar (63) is disposed at the inner periphery of the gear portion (75). The axial range in which the collar (63) is present in the holder (64) overlaps the axial range in which the gear portion (75) is provided in the holder (64).

## Description

### TECHNICAL FIELD

The present disclosure relates to magnetic yoke assemblies and sensor devices.

### BACKGROUND ART

As described in, for example, Patent Document 1, a sensor device that is used in a steering device is conventionally known in the art. This sensor device is provided on the outer periphery of a steering shaft to which a steering wheel is connected, and detects both steering torque input by a driver and a steering angle that is a rotation angle of the steering shaft.

Specifically, the steering shaft includes an input shaft, an output shaft, and a torsion bar that connects the input shaft and the output shaft to each other. The sensor device includes a sensor magnet fixed to the input shaft, a magnetic yoke assembly fixed to the output shaft, and driven gears that rotate in response to rotation of the magnetic yoke assembly. The sensor device detects the steering torque based on the magnetic flux flowing through the magnetic yoke assembly, and detects the steering angle based on the rotation angles of the driven gears.

As described in, for example, Patent Document 2, such a magnetic yoke assembly includes a pair of yoke cores, an annular collar, and a tubular resin holder that holds the yoke cores and the collar. The collar is held at one axial end of the resin holder, and a gear portion that meshes with the driven gears is provided on the outer peripheral surface of the other axial end thereof.

### Related Art Documents

### Patent Documents

Patent Document 1: Japanese Unexamined Patent Application Publication No. 2021-12166 (JP 2021-12166 A)
Patent Document 2: Japanese Unexamined Patent Application Publication No. 2020-76660 (JP 2020-76660 A)

### SUMMARY OF THE INVENTION

### Problem to be Solved by the Invention

There is a need for reduction in size of such a magnetic yoke assembly and a sensor device including the magnetic yoke assembly.

### Means for Solving the Problem

One aspect of the present disclosure provides a magnetic yoke assembly. The magnetic yoke assembly includes a pair of yoke cores, an annular collar, and a tubular holder that holds the pair of yoke cores and the collar. The holder includes a gear portion that includes a plurality of external teeth protruding radially outward from the holder. The collar is disposed at an inner periphery of the gear portion. An axial range in which the collar is present in the holder overlaps an axial range in which the gear portion is provided in the holder.

Another aspect of the present disclosure provides a sensor device. The sensor device includes: a sensor magnet configured to rotate with a first shaft; the above magnetic yoke assembly configured to rotate with a second shaft connected to the first shaft via a torsion bar; a pair of magnetic flux collecting members disposed around an outer periphery of the magnetic yoke assembly with a space between the pair of magnetic flux collecting members and the outer periphery of the magnetic yoke assembly; a magnetic sensor that generates a signal according to magnetic flux flowing through the pair of magnetic flux collecting members; a driven gear that rotates in response to rotation of the magnetic yoke assembly; and a rotation sensor that generates a signal according to a rotation angle of the driven gear.

### BRIEF DESCRIPTION OF THE DRAWINGS

[FIG. 1] FIG. 1 is a sectional view of a steering column device including a sensor device according to an embodiment, taken along an axial direction.
[FIG. 2] FIG. 2 is an enlarged sectional view around the sensor device in FIG. 1.
[FIG. 3] FIG. 3 is an exploded perspective view of the sensor device in FIG. 1 and its peripheral components.
[FIG. 4] FIG. 4 is a perspective view of a magnetic yoke assembly constituting the sensor device in FIG. 1.
[FIG. 5] FIG. 5 is an enlarged sectional view showing a meshing portion between the magnetic yoke assembly and a driven gear that constitute the sensor device in FIG. 1.

### MODES FOR CARRYING OUT THE INVENTION

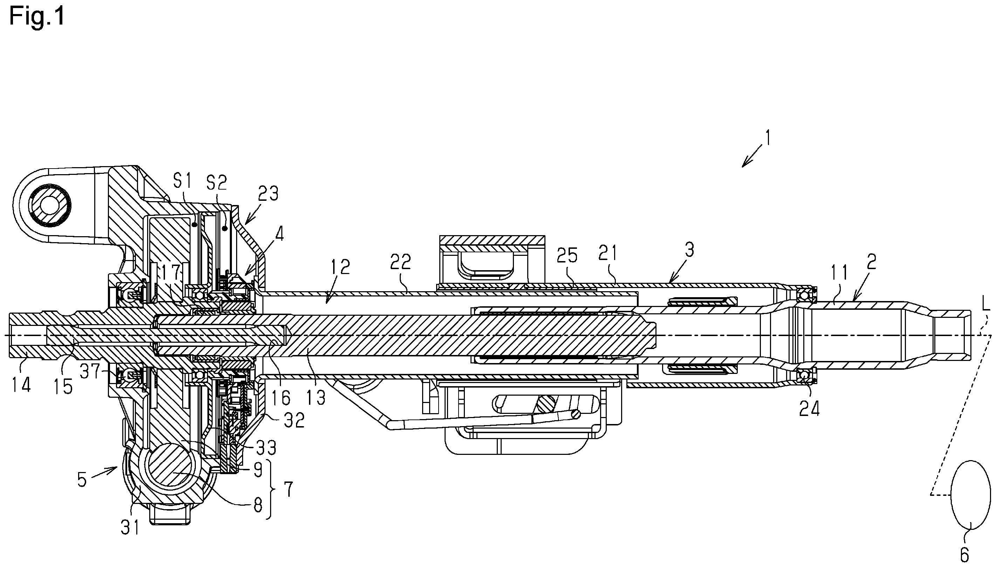

An embodiment in which a magnetic yoke assembly and sensor device according to the present disclosure are applied to a steering column device will be described with reference to the drawings. A steering column device 1 shown in FIG. 1 is installed in a vehicle so as to generally extend in a front-rear direction of the vehicle. In the following description, the left side in FIG. 1 corresponds to the front side of the vehicle, and the right side in FIG. 1 corresponds to the rear side of the vehicle. Directions indicated by terms such as "front," "rear," "up," "down," "right," and "left" are defined with respect to the vehicle.

### (Overall Configuration)

As shown in FIG. 1, the steering column device 1 includes a column shaft 2 and a steering column 3 that rotatably houses the column shaft 2. The column shaft 2 and the steering column 3 are disposed on a common axis L. The steering column device 1 further includes a sensor device 4 and an EPS actuator 5.

A steering wheel 6 is connected to a rear end of the column shaft 2. A front end of the column shaft 2 is connected to steered wheels via a steering operation mechanism, not shown. The steered wheels are thus turned according to a steering operation by a driver.

The sensor device 4 outputs both a signal for detecting steering torque input by the driver and a signal for detecting a steering angle that is a rotation angle of the column shaft 2. The EPS actuator 5 includes a motor, not shown, and a speed reducer 7. The motor is controlled by a control device, not shown, so as to generate torque according to signals including the signals output from the sensor device 4. Rotation of the motor is reduced in speed by the speed reducer 7 and transmitted to the column shaft 2. The EPS actuator 5 thus applies an assist force to assist in the steering operation by the driver. The speed reducer 7 of the present embodiment is a worm reducer including a worm shaft 8 and a worm wheel 9. However, the speed reducer 7 is not limited to this, and any other speed reducer may be used.

### (Column Shaft 2)

The column shaft 2 includes an upper shaft 11 and a lower shaft 12. The upper shaft 11 has an elongated tubular shape. The steering wheel 6 is connected to a rear end of the upper shaft 11.

The term "tubular" as used in the present specification can refer to any shape that is generally tubular, and includes a tubular shape formed by combining a plurality of parts and a tubular shape having a cut in its portion such as a C-shape. The "tubular" shape includes, but is not limited to, shapes that are circular, elliptical, and polygonal with sharp or rounded corners as viewed in the axial direction. In the present embodiment, the upper shaft 11 has a circular shape as viewed in the axial direction.

The lower shaft 12 includes an input shaft 13 that is a first shaft, an output shaft 14 that is a second shaft, and a torsion bar 15 that connects the input shaft 13 and the output shaft 14 to each other. The input shaft 13 has, for example, an elongated cylindrical shape. The input shaft 13 is fitted to an inner peripheral portion of the upper shaft 11 by spline engagement. The input shaft 13 is thus connected to the upper shaft 11 so as to be rotatable with the upper shaft 11 and to be movable relative to the upper shaft 11 in the axial direction. The input shaft 13 has a fixing hole 16 that opens at its front end.

The output shaft 14 has, for example, an elongated tubular shape. In the present embodiment, the output shaft 14 has a circular shape as viewed in the axial direction. The front end of the input shaft 13 is inserted into a rear end of the output shaft 14. A bearing 17 is provided between an outer peripheral surface of the front end of the input shaft 13 and an inner peripheral surface of the rear end of the output shaft 14. The output shaft 14 thus rotatably supports the input shaft 13. The worm wheel 9 is fixed to the outer periphery of the output shaft 14.

The torsion bar 15 has, for example, an elongated cylindrical shape. A rear end of the torsion bar 15 is fitted in the fixing hole 16. The torsion bar 15 is connected to the input shaft 13 so as to be rotatable with the input shaft 13. A front end of the torsion bar 15 is fitted to the inner periphery of a front end of the output shaft 14. The torsion bar 15 is thus connected to the output shaft 14 so as to be rotatable with the output shaft 14. Twisting of the torsion bar 15 thus causes the input shaft 13 and the output shaft 14 to rotate relative to each other.

### (Steering Column 3)

The steering column 3 includes an outer tube 21, an inner tube 22, and a housing 23.

The outer tube 21 has a tubular shape. The outer tube 21 rotatably supports the upper shaft 11 via a bearing 24. The inner tube 22 has a tubular shape thinner than the outer tube 21. In the present embodiment, the outer tube 21 and the inner tube 22 have a circular shape as viewed in the axial direction. A rear end of the inner tube 22 is fitted to the inner periphery of the outer tube 21. A front end of the inner tube 22 is fixed to a housing 23.

The steering column 3 of the present embodiment further includes a sleeve 25 disposed between the outer tube 21 and the inner tube 22. For example, when an impact load due to a vehicle collision is applied to the steering wheel 6, the outer tube 21 moves relative to the inner tube 22 in the axial direction while deforming the sleeve 25. The steering column 3 contracts in this manner, whereby the impact load is absorbed. In another embodiment, the front end of the inner tube may be fitted directly to the inner periphery of the outer tube. The length by which the steering column 3 contracts when an impact load is applied to the steering wheel 6 is sometimes called an EA stroke.

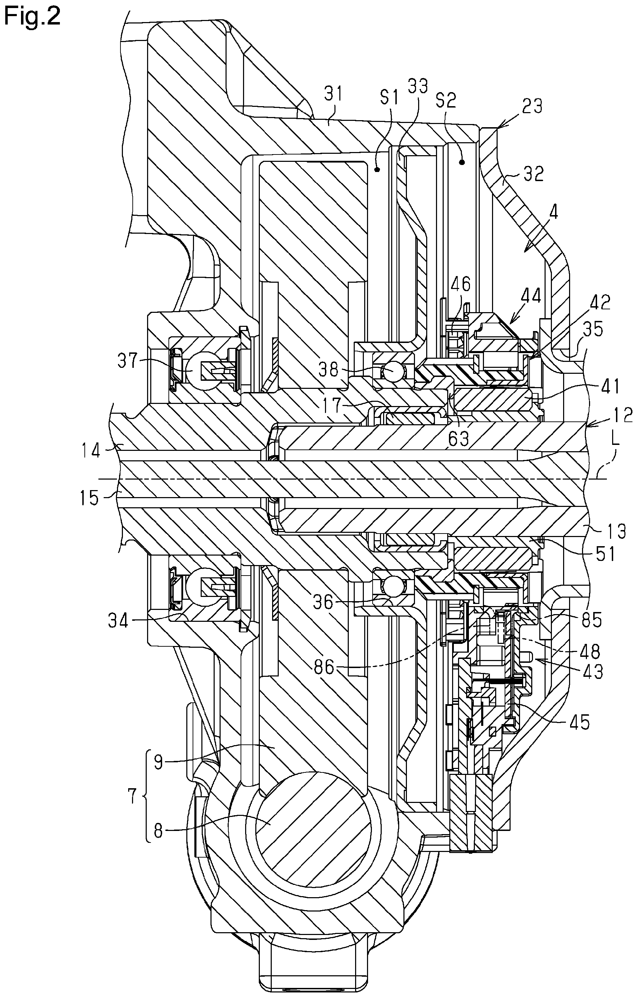

As shown in FIGS. 1 and 2, the housing 23 includes a housing body 31, a cover 32, and a partition plate 33. The housing body 31 has a tubular shape. In the present embodiment, the housing body 31 has a circular shape as viewed in the axial direction. The housing body 31 has an end wall at its one axial end. In the illustrated example, the end wall is provided at a front end of the housing body 31. The end wall of the housing body 31 has a through hole 34 extending therethrough in the axial direction. The cover 32 has a disc shape. The cover 32 is fixed to a rear end of the housing body 31 so as to cover the opening of the housing body 31. The cover 32 has a through hole 35 extending therethrough in the axial direction. The partition plate 33 has a disc shape. The partition plate 33 is fixed to an inner peripheral surface of the housing body 31. The space inside the housing body 31 is thus divided into a gear housing space S1 located on the front side and a sensor housing space S2 located on the rear side. The speed reducer 7 is housed in the gear housing space S1, and the sensor device 4 is housed in the sensor housing space S2. The partition plate 33 has a through hole 36 extending therethrough in the axial direction. The through holes 34 to 36 are all provided on the axis L. The housing 23 of the present embodiment rotatably supports the output shaft 14 via bearings 37, 38 provided in the through holes 34, 36. In another embodiment, for example, the input shaft 13 may be rotatably supported via a bearing provided in the through hole 35. The manner in which the housing 23 supports the column shaft 2 can be changed as appropriate.

### (Sensor Device 4)

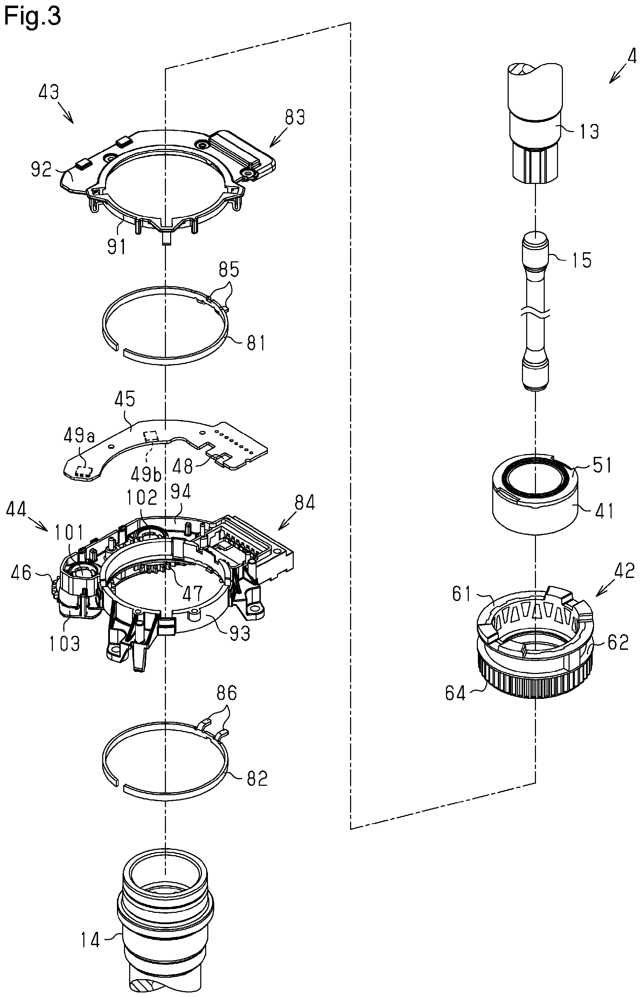

As shown in FIGS. 2 and 3, the sensor device 4 includes a sensor magnet 41, a magnetic yoke assembly 42, a magnetic flux collecting unit 43, a gear unit 44, and a circuit board 45. The gear unit 44 includes two driven gears 46, 47 that rotate in response to rotation of the magnetic yoke assembly 42. The circuit board 45 includes: a magnetic sensor 48 that generates a signal according to the magnetic flux flowing through the magnetic flux collecting unit 43; and rotation sensors 49a, 49b that generate signals according to the rotation angles of the driven gears 46, 47. The signal output from the magnetic sensor 48 corresponds to the steering torque, and the signals output from the rotation sensors 49a, 49b correspond to the steering angle.

The sensor device 4 may output the signal output from the magnetic sensor 48 itself and/or the signals output from the rotation sensors 49a, 49b themselves to the control device for the motor. Alternatively, the sensor device 4 may output, to the control device for the motor, the steering torque detected based on the signal output from the magnetic sensor 48 and/or the steering angle detected based on the signals output from the rotation sensors 49a, 49b.

### The components of the sensor device 4 will be described in detail below. (Sensor Magnet 41)

The sensor magnet 41 is a tubular ring magnet that has a circular shape as viewed in the axial direction. The sensor magnet 41 is magnetized in the radial direction such that magnetic poles of different polarities are arranged alternately in the circumferential direction. The sensor device 4 of the present embodiment includes a magnet holder 51, and the sensor magnet 41 is fixed to the outer peripheral surface of the input shaft 13 via the magnet holder 51. In another embodiment, the sensor magnet 41 may be fixed directly to the outer circumferential surface of the input shaft 13. In still another embodiment, the sensor magnet 41 may be a plurality of plate-shaped magnets.

### (Magnetic Yoke Assembly 42)

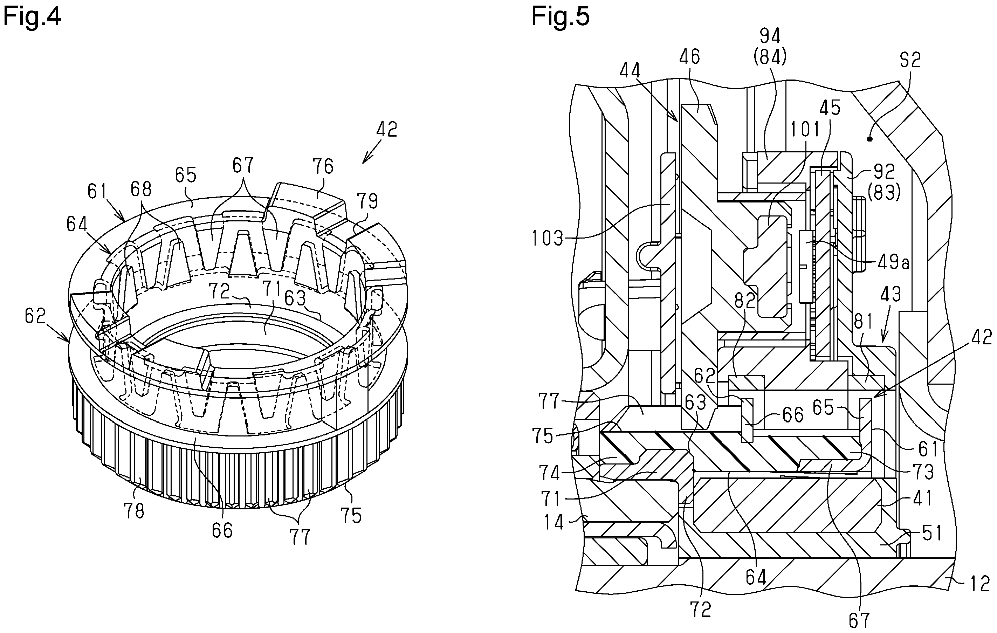

As shown in FIGS. 3 and 4, the magnetic yoke assembly 42 includes a pair of yoke cores 61, 62, a collar 63, and a holder 64 that holds the pair of yoke cores 61, 62 and the collar 63.

Each of the yoke cores 61, 62 is made of a magnetic material and has an annular shape. The yoke cores 61, 62 are disposed spaced apart from each other in the axial direction. Each of the yoke cores 61, 62 has a ring portion 65, 66 and a plurality of claw portions 67, 68, respectively. The claw portions 67, 68 protrude in directions toward each other from their corresponding ring portions 65, 66. The claw portions 67, 68 are provided at equal intervals in the circumferential direction, and the claw portions 67 and the claw portions 68 are arranged alternately in the circumferential direction.

The term "annular" as used in the present specification can refer to any shape that is generally annular, and includes an annular shape formed by combining a plurality of parts and an annular shape having a cut in its portion such as a C-shape. The "annular" shape includes, but is not limited to, shapes that are circular, elliptical, and polygonal with sharp or rounded corners as viewed in the axial direction. In the present embodiment, each of the yoke cores 61, 62 has a circular shape as viewed in the axial direction.

As shown in FIGS. 4 and 5, the collar 63 is made of, for example, a metal material and has an annular shape. In the present embodiment, the collar 63 has a circular shape as viewed in the axial direction. The collar 63 is disposed forward of the pair of yoke cores 61, 62 in the axial direction. The collar 63 is fitted to the outer periphery of the rear end of the output shaft 14. The collar 63 includes an annular body portion 71 that is fitted on the output shaft 14, and a flange portion 72 that protrudes radially inward from an inner peripheral surface of the body portion 71. The radial thickness of the body portion 71 is smaller at its front end than at its rear end. The flange portion 72 has, for example, an annular shape.

The flange portion 72 is provided at the rear end of the body portion 71. In other words, the flange portion 72 is provided at the end of the body portion 71 that is located closer to the yoke cores 61, 62. Therefore, when assembling the sensor device 4, the collar 63 is fitted onto the output shaft 14 from the rear. In other words, the collar 63 is moved forward relative to the output shaft 14 to fit onto the output shaft 14. That is, the direction in which the collar 63 is fitted onto the output shaft 14 is a forward direction along the axis of the holder 64. The direction in which the collar 63 is fitted onto the output shaft 14 is also referred to as first direction.

The holder 64 is made of, for example, a resin material and has a tubular shape. In the present embodiment, the holder 64 has a circular shape as viewed in the axial direction. The axial direction of the holder 64 coincides with the direction along the axis L. The holder 64 of the present embodiment is formed integral with the pair of yoke cores 61, 62 and the collar 63 by insert molding. In another embodiment, the holder 64 may be molded alone, and then the yoke cores 61, 62 and the collar 63 may be attached to the holder 64. The holder 64 holds the pair of yoke cores 61, 62 and the collar 63 on the axis L.

Specifically, the holder 64 includes: a yoke core holding portion 73 that holds the pair of yoke cores 61, 62; a collar holding portion 74 that holds the collar 63; a gear portion 75; and a positioning portion 76.

The yoke core holding portion 73 holds the yoke cores 61, 62 such that inner surfaces of the claw portions 67, 68 are exposed on the inner peripheral side of the holder 64. The yoke core holding portion 73 also holds the yoke cores 61, 62 such that outer peripheral edges of the ring portions 65, 66 protrude radially outward from the holder 64.

The gear portion 75 is provided next to the yoke core holding portion 73 in the axial direction of the holder 64. For example, the gear portion 75 is continuous with the front of the yoke core holding portion 73. The gear portion 75 includes a plurality of external teeth 77 protruding radially outward from the holder 64, and tooth spaces 78 between the plurality of external teeth 77. In the present embodiment, the depth and thickness in an axial front end region of each external tooth 77 both decrease toward the front. In another embodiment, the depth and thickness of each external tooth 77 may be constant in the axial direction. A front end of each tooth space 78 is open to the front in the axial direction, and a rear end of each tooth space 78 is closed by the ring portion 66 of the yoke core 62. In other words, the tooth spaces 78 are open in the direction in which the collar 63 is fitted onto the output shaft 14.

The collar holding portion 74 holds the collar 63 such that an inner peripheral surface of the collar 63 is exposed on the inner peripheral side of the holder 64. The collar holding portion 74 of the present embodiment also holds the collar 63 such that the front end of the body portion 71 is exposed in the axial direction. In another embodiment, the front end of the body portion 71 may be covered by the collar holding portion 74.

The collar holding portion 74 is provided at the inner periphery of the gear portion 75. That is, the collar 63 is provided at the inner periphery of the gear portion 75. The axial range in which the collar 63 is present in the holder 64 overlaps the axial range in which the gear portion 75 is provided in the holder 64. Specifically, the entire axial range in which the collar 63 is present in the holder 64 is included in the axial range in which the gear portion 75 is provided in the holder 64.

The positioning portion 76 is provided so as to protrude axially rearward from the yoke core holding portion 73. The positioning portion 76 has, for example, a sector shape as viewed in the axial direction. The positioning portion 76 has, in its middle in the circumferential direction, a positioning groove 79 extending therethrough in the radial direction. In the illustrated example, the holder 64 includes two positioning portions 76. However, the present disclosure is not limited to this, and the holder 64 may have one positioning portion 76 or three or more positioning portions 76.

The collar 63 is press-fitted on the rear end of the output shaft 14. The magnetic yoke assembly 42 is thus fixed to the output shaft 14 so as to be rotatable with the output shaft 14. With the magnetic yoke assembly 42 fixed to the output shaft 14, the magnetic yoke assembly 42 is disposed around the outer periphery of the sensor magnet 41 with a space therebetween. The end face of the rear end of the output shaft 14 abuts on the flange portion 72.

### (Magnetic Flux Collecting Unit 43)

As shown in FIGS. 2, 3 and 5, the magnetic flux collecting unit 43 includes a pair of magnetic flux collecting members 81, 82, a first support frame 83, and a second support frame 84.

Each of the magnetic flux collecting members 81, 82 is made of a magnetic material and has a C-shape. The magnetic flux collecting member 81 has two protrusions 85 that protrude in the radial direction, and the magnetic flux collecting member 82 has two protrusions 86 that protrude in the radial direction. The magnetic flux collecting member 81 is disposed around the outer periphery of the yoke core 61 with a space therebetween, and the magnetic flux collecting member 82 is disposed around the outer periphery of the yoke core 62 with a space therebetween. In other words, the magnetic flux collecting members 81, 82 are disposed spaced apart from each other in the axial direction. The magnetic flux flowing through the yoke core 61 is induced to the magnetic flux collecting member 81, and the magnetic flux flowing through the yoke core 62 is induced to the magnetic flux collecting member 82. The protrusions 85, 86 face each other in the axial direction.

The term "face" as used in the present specification refers to surfaces or members being positioned in front of each other, and includes not only when they are positioned completely in front of each other, but also when they are positioned partially in front of each other. The term "face" as used in the present specification includes both when a member that is different from two portions is interposed between the two portions, and when nothing is interposed between the two portions.

The first support frame 83 includes an annular first frame portion 91 and a cover portion 92 provided radially outward of the first frame portion 91. The first frame portion 91 holds the magnetic flux collecting member 81 such that an inner peripheral surface of the magnetic flux collecting member 81 is exposed on the inner peripheral side of the first support frame 83.

The second support frame 84 includes an annular second frame portion 93 and a support portion 94 provided radially outward of the second frame portion 93. The second frame portion 93 holds the magnetic flux collecting member 82 such that an inner peripheral surface of the magnetic flux collecting member 82 is exposed on the inner peripheral side of the second support frame 84. The support portion 94 supports the gear unit 44 and the circuit board 45. The cover portion 92 covers the circuit board 45 supported by the support portion 94 from the rear.

### (Gear Unit 44)

The gear unit 44 includes sensor magnets 101, 102 that rotate with the driven gears 46, 47, and a support plate 103 in addition to the driven gears 46, 47. As shown in FIG. 5, the sensor magnet 101 is fixed to the driven gear 46 so as to be rotatable with the driven gear 46. The sensor magnet 102 is fixed to the driven gear 47 so as to be rotatable with the driven gear 47. Peripheral configurations of the driven gear 47 are similar to those of the driven gear 46. Therefore, the meshing portion between the driven gear 46 and the gear portion 75 is shown in FIG. 5, but the meshing portion between the driven gear 47 and the gear portion 75 is not shown in FIG. 5.

The support plate 103 has the shape of a flat plate. The support plate 103 rotatably supports the driven gears 46, 47. The support plate 103 is fixed to the second support frame 84 such that the driven gears 46, 47 are sandwiched between the support plate 103 and the support portion 94 of the second support frame 84.

Each of the driven gears 46, 47 meshes with the gear portion 75 of the magnetic yoke assembly 42. The driven gears 46, 47 are disposed rearward of the rear end face of the output shaft 14. In other words, the driven gears 46, 47 are disposed in the direction opposite to the direction in which the collar 63 is fitted onto the output shaft 14, with respect to the rear end of the output shaft 14. The driven gears 46, 47 have different numbers of teeth. Therefore, when the output shaft 14, i.e., the gear portion 75, rotates, the rotation angle of the driven gear 46 and the rotation angle of the driven gear 47 are different from each other. Regarding the external teeth of the driven gears 46, 47, the depth and thickness in a rear end region of each external tooth in the present embodiment both decrease toward the rear. In another embodiment, the depth and thickness of each external tooth may be constant in the axial direction.

### (Circuit Board 45)

The circuit board 45 has the shape of a flat plate. Various circuit elements including the magnetic sensor 48 and the rotation sensors 49a, 49b are mounted on the circuit board 45. The circuit board 45 is supported by the support portion 94 of the second support frame 84.

The magnetic sensor 48 is, for example, a Hall sensor or a magnetoresistive sensor. As shown in FIG. 2, the magnetic sensor 48 is mounted on a region of the circuit board 45 that is sandwiched between the protrusions 85, 86. The circuit board of another embodiment may include a redundant magnetic sensor different from the magnetic sensor 48, and this magnetic sensor may be mounted in a region of the circuit board 45 that is sandwiched between the other pair of protrusions 85, 86.

The sensor magnet 41 rotates with the input shaft 13, and the magnetic yoke assembly 42 rotates with the output shaft 14. When the input shaft 13 and the output shaft 14 rotate relative to each other with twisting of the torsion bar 15 due to the steering operation by the driver, the relative positions of the sensor magnet 41 and the magnetic yoke assembly 42 in the circumferential direction change accordingly. Therefore, the magnetic flux flowing through the magnetic yoke assembly 42 changes according to the amount of twisting of the torsion bar 15, i.e., the magnitude of the steering torque input by the driver. As a result, the magnetic flux flowing through the magnetic flux collecting unit 43 also changes according to the change in magnetic flux flowing through the magnetic yoke assembly 42. The magnetic sensor 48 detects the magnetic flux flowing through the magnetic flux collecting unit 43, and generates a signal according to this magnetic flux, that is, a signal indicating the steering torque.

The rotation sensors 49a, 49b are, for example, Hall sensors or magnetoresistive sensors. As shown in FIG. 5, the rotation sensor 49a is mounted on a region of the circuit board 45 that faces the sensor magnet 101, and the rotation sensor 49b is mounted on a region of the circuit board 45 that faces the sensor magnet 102.

The driven gears 46, 47 rotate in response to rotation of the magnetic yoke assembly 42. The rotation sensors 49a, 49b generate signals indicating the rotation angles of the driven gears 46, 47, i.e., the steering angle. Since the rotation angle of the driven gear 46 and the rotation angle of the driven gear 47 are different from each other as described above, the phases of the signals generated by the rotation sensors 49a, 49b are different from each other. Therefore, the sensor device 4 of the present embodiment can detect the steering angle as an absolute angle exceeding 360°, based on the signals output from the rotation sensors 49a, 49b.

### (Assembly of Sensor Device 4)

The sensor device 4 is assembled by attaching the components of the sensor device 4 to the output shaft 14 in order from the rear. Of these components, the magnetic yoke assembly 42 is attached after the gear unit 44 is fixed inside the housing 23.

Specifically, part of a jig, not shown, is inserted into the positioning groove 79 to position the magnetic yoke assembly 42 with respect to the output shaft 14 in the circumferential direction. In this state, the magnetic yoke assembly 42 is attached to the output shaft 14 from the rear. In this manner, the magnetic yoke assembly 42 is attached to the output shaft 14 and the magnetic yoke assembly 42 is meshed with the driven gears 46, 47.

Next, functions and effects of the present embodiment will be described. (1) The sensor device 4 includes: the sensor magnet 41 that rotates with the input shaft 13; and the magnetic yoke assembly 42 that rotates with the output shaft 14. The sensor device 4 further includes: the pair of magnetic flux collecting members 81, 82 disposed around the outer periphery of the magnetic yoke assembly 42 with a space between the pair of magnetic flux collecting members 81, 82 and the outer periphery of the magnetic yoke assembly 42; and the magnetic sensor 48 that generates a signal according to the magnetic flux flowing through the pair of magnetic flux collecting members 81, 82. The sensor device 4 further includes: the driven gears 46, 47 that rotate in response to rotation of the magnetic yoke assembly 42; and the rotation sensors 49a, 49b that generate signals according to the rotation angles of the driven gears 46, 47.

The magnetic yoke assembly 42 includes the pair of yoke cores 61, 62, the collar 63, and the holder 64 that holds the pair of yoke cores 61, 62 and the collar 63. The holder 64 includes the gear portion 75 having the plurality of external teeth 77 that protrude radially outward from the holder 64. The collar 63 is disposed at the inner periphery of the gear portion 75. The axial range in which the collar 63 is present in the holder 64 overlaps the axial range in which the gear portion 75 is provided in the holder 64. Therefore, the axial length of the holder 64 can be reduced and thus the size of the sensor device 4 can be reduced, as compared to the case where these axial ranges do not overlap each other. The steering column device 1 can thus be reduced in size while ensuring the EA stroke.

(2) The collar 63 includes the annular body portion 71 that is fitted on the output shaft 14, and the flange portion 72 that protrudes radially inward from the inner peripheral surface of the body portion 71 and that abuts on the end of the output shaft 14. Since the end of the output shaft 14 abuts on the flange portion 72, this facilitates axial positioning of the collar 63 with respect to the output shaft 14, i.e., axial positioning of the magnetic yoke assembly 42 with respect to the output shaft 14.

(3) The collar 63 is moved relative to the output shaft 14 in the first direction along the axis of the holder 64 to fit onto the output shaft 14. The tooth spaces 78 between the plurality of external teeth 77 are open in the first direction. It is therefore possible to fit the collar 63 onto the output shaft 14 while meshing the gear portion 75 with the driven gears 46, 47. This can improve the ease of assembly of the sensor device 4.

(4) The holder 64 further includes the positioning portion 76 for positioning the holder 64 with respect to the output shaft 14 in the circumferential direction. This facilitates circumferential positioning of the holder 64 with respect to the output shaft 14.

(5) The collar 63 is fitted to the rear end of the output shaft 14. The driven gears 46, 47 are disposed in the direction opposite to the first direction with respect to the rear end of the output shaft 14. Therefore, when attaching the magnetic yoke assembly 42, the collar 63 begins to fit onto the outer periphery of the output shaft 14 after at least part of the gear portion 75 meshes with the driven gears 46, 47. It is thus possible to fit the collar 63 onto the output shaft 14 after meshing the gear portion 75 with the driven gears 46, 47 in a state where the circumferential position of the magnetic yoke assembly 42 can be easily changed.

The present embodiment can be modified as follows. The present embodiment and the following modifications can be combined as long as no technical contradiction arises.
- Although the driven gears 46, 47 are disposed rearward of the rear end face of the output shaft 14, the present disclosure is not limited to this. The driven gears 46, 47 may be disposed such that the axial positions of rear end faces of the driven gears 46, 47 are aligned with the axial position of the rear end face of the output shaft 14. In this case, when attaching the magnetic yoke assembly 42, the collar 63 begins to fit onto the output shaft 14 at the same time as the gear portion 75 begins to mesh with the driven gears 46, 47. Alternatively, the driven gears 46, 47 may be disposed forward of the rear end face of the output shaft 14. In this case, when attaching the magnetic yoke assembly 42, the gear portion 75 begins to mesh with the driven gears 46, 47 after at least part of the collar 63 fits onto the output shaft 14.
- Although the positioning portion 76 is provided so as to protrude rearward in the axial direction from the yoke core holding portion 73, the present disclosure is not limited to this. For example, the positioning portion 76 may be provided so as to protrude forward in the axial direction from the gear portion 75, or the positioning portion 76 may be provided between the yoke core holding portion 73 and the gear portion 75. The positioning portion 76 may have a structure having, for example, a positioning hole instead of the positioning groove 79. The holder 64 may not have the positioning portion 76.
- The tooth spaces 78 of the gear portion 75 may not be open in the direction in which the collar 63 is fitted onto the output shaft 14, i.e., in the first direction. In this case, for example, the driven gears 46, 47 are meshed with the gear portion 75 from radially outside the magnetic yoke assembly 42.
- Although the flange portion 72 of the collar 63 is provided at the end of the body portion 71 that is located closer to the yoke cores 61, 62, the present disclosure is not limited to this. For example, the flange portion 72 of the collar 63 may be provided near the axial middle of the body portion 71. The collar 63 may not have the flange portion 72.
- Although the entire axial range in which the collar 63 is present in the holder 64 is included in the axial range in which the gear portion 75 is provided in the holder 64, the present disclosure is not limited to this. Part of the axial range in which the collar 63 is present in the holder 64 may be located outside the axial range in which the gear portion 75 is provided in the holder 64.
- The configuration of the magnetic flux collecting unit 43 can be changed as appropriate as long as it can hold the pair of magnetic flux collecting members 81, 82. For example, the pair of magnetic flux collecting members 81, 82 may be held by a single support frame instead of by the first support frame 83 and the second support frame 84.
- The rotation sensors 49a, 49b may be sensors other than sensors that detect magnetic flux, such as rotary encoders, as long as they can detect the rotation angles of the driven gears 46, 47. In this case, the sensor magnets 101, 102 are not necessary.
- Although the gear unit 44 includes the two driven gears 46, 47 that mesh with the gear portion 75, the present disclosure is not limited to this. The gear unit 44 may include only one driven gear that meshes with the gear portion 75, or three or more driven gears that mesh with the gear portion 75. When the gear unit 44 includes two or more driven gears, not all of the driven gears need to mesh with the gear portion 75. For example, one driven gear may mesh with the gear portion 75, and the other driven gears may mesh only with the one driven gear.
- Although the sensor magnet 41 is fixed to the input shaft 13 and the magnetic yoke assembly 42 is fixed to the output shaft 14, the sensor magnet 41 may be fixed to the output shaft 14 and the magnetic yoke assembly 42 may be fixed to the input shaft 13. In this case, the input shaft 13 corresponds to the second shaft, and the output shaft 14 corresponds to the first shaft.
- Although the sensor device 4 is provided on the outer periphery of the column shaft 2, the present disclosure is not limited to this. For example, the sensor device 4 may be provided on the outer periphery of a pinion shaft that constitutes a rack and pinion mechanism.

## Claims

1. A magnetic yoke assembly comprising:
a pair of yoke cores;
an annular collar; and
a tubular holder that holds the pair of yoke cores and the collar, wherein
the holder includes a gear portion that includes a plurality of external teeth protruding radially outward from the holder,
the collar is disposed at an inner periphery of the gear portion, and
an axial range in which the collar is present in the holder overlaps an axial range in which the gear portion is provided in the holder.

2. The magnetic yoke assembly according to claim 1, wherein the collar includes
an annular body portion that fits onto a shaft, and
a flange portion protruding radially inward from an inner peripheral surface of the body portion and configured to abut on an end of the shaft.

3. The magnetic yoke assembly according to claim 2, wherein:
the collar is configured to be moved relative to the shaft in a first direction along an axis of the holder to fit onto the shaft; and
tooth spaces between the plurality of external teeth are open in the first direction.

4. The magnetic yoke assembly according to any one of claims 1 to 3, wherein the holder further includes a positioning portion configured to circumferentially position the holder with respect to a shaft onto which the collar is fitted.

5. A sensor device comprising:
a sensor magnet configured to rotate with a first shaft;
the magnetic yoke assembly according to any one of claims 1 to 4, the magnetic yoke assembly being configured to rotate with a second shaft connected to the first shaft via a torsion bar;
a pair of magnetic flux collecting members disposed around an outer periphery of the magnetic yoke assembly with a space between the pair of magnetic flux collecting members and the outer periphery of the magnetic yoke assembly;
a magnetic sensor that generates a signal according to magnetic flux flowing through the pair of magnetic flux collecting members;
a driven gear that rotates in response to rotation of the magnetic yoke assembly; and
a rotation sensor that generates a signal according to a rotation angle of the driven gear.

6. The sensor device according to claim 5, wherein:
the collar of the magnetic yoke assembly is configured to be moved relative to an end of the second shaft in a first direction along an axis of the holder to fit onto the end; and
the driven gear is disposed in a direction opposite to the first direction with respect to the end.
